# EUROPEAN PATENT APPLICATION

(11) **EP 4 636 455 A1**
(43) Date of publication of application: **22.10.2025**
(21) Application number: 24170961.7
(22) Date of filing: 18.04.2024
(51) Int. Cl.: G02B 21/26, G02B 21/36

(54) **POSITIONING DEVICE FOR A MICROSCOPE, MICROSCOPE, AND METHOD**

(71) Applicant: Leica Instruments (Singapore) Pte. Ltd., 608924 Singapore (SG)
(72) Inventor: Gniza, Matthias, 608924 Singapore (SG); Zagel, Christian, 608924 Singapore (SG); Grabher, Günter, 608924 Singapore (SG)
(74) Representative: Schaumburg und Partner Patentanwälte mbB

(57) **Abstract**

A positioning device (102) for a microscope (100) comprises a plate drive unit (110) configured to move a microscope stage (106) of the microscope (100). The microscope stage (106) is configured to receive a sample (108). The positioning device (102) also comprises at least one vibration detection sensor (116, 118, 120) configured to detect a vibration of the microscope stage (106) and to generate a sensor signal corresponding to said vibration, and a controller (126) configured to control at least the plate drive unit (110). The controller (126) is further configured to process the sensor signal and to generate a control signal for controlling the plate drive unit (110) based on the processed sensor signal.

## Description

### Technical field

The invention relates to a positioning device for a microscope. The invention further relates to a microscope and to a method for positioning a sample in a microscope.

### Background

Positioning devices of microscopes are used to adjust the position of a sample in the microscope's field of view. The sample is arranged on a microscope stage, and the microscope stage is moved perpendicular to the optical axis of the microscope, i.e. in the x- and y-directions, and/or parallel to the optical axis of the microscope, i.e. in the z-direction, to position the sample. To facilitate an automatic movement of the sample, positioning devices may include drive units that automatically move the microscope stage. When moving the sample, vibrations occur that can cause blurring or distortion in images captured by the microscope during the movement, especially at high magnifications. Thus, vibration compensation is necessary to mitigate said negative effects.

### Summary

It is an object to provide a positioning device for a microscope, a microscope, and method for positioning a sample in a microscope that enable better vibration compensation than previously known.

The aforementioned object is achieved by the subject-matter of the independent claims. Advantageous embodiments are defined in the dependent claims and the following description.

The proposed positioning device for a microscope comprises a plate drive unit configured to move a microscope stage of the microscope. The microscope stage is configured to receive a sample. The positioning device also comprises at least one vibration detection sensor configured to detect a vibration of the microscope stage and to generate a sensor signal corresponding to said vibration, and a controller configured to control at least the plate drive unit. The controller is further configured to process the sensor signal and to generate a control signal for controlling the plate drive unit based on the processed sensor signal.

The proposed positioning device may be used to automatically position the sample within the field of view of the microscope, for example when searching for a region of interest or during an image acquisition. During this automatic movement, vibrations may occur that result in blurring or distortion of the image captured by the microscope. These vibrations are detected by the vibration detection sensor and converted into the sensor signal. The vibrations may be detected in a calibration performed before an actual imaging of the sample, and/or during the actual imaging. The detection of the vibration is described in more detail below with reference to embodiments. The sensor signal generated by the vibration detection sensor is processed by the controller in order to generate the control signal. The control signal may comprise multiple instructions for different elements of the plate drive unit, for example different motors of the plate drive unit configured to move the microscope stage in different directions each. In other words, the microscope stage is moved based on vibrations detected by the vibration detection sensor. The movement of the microscope stage can thus be controlled in such a way that vibrations are compensated and/or minimized in order to produce blur and distortion free images. Thereby, the proposed positioning device provides a vibration compensation, and since the vibration compensation is based on actual measurements, the vibration compensation provided by the proposed positioning device is better than previously known methods and devices for vibration compensation in microscopes.

The vibration detection sensor is preferably arranged at the microscope stage. In such a position, the vibration detection sensor can best detect the vibrations of the microscope stage.

In an embodiment the plate drive unit comprises at least one vibration generating element configured to cause a vibration of the microscope stage. The controller may be configured to generate the control signal such that the vibration generating element causes a vibration of the microscope stage that counteracts the vibration currently detected by the vibration detection sensor. In this embodiment, the control signal is generated by the controller based on the currently detected vibration of the microscope stage. The control signal then causes the vibration generating element to counteract the current vibration of the microscope stage by an opposing vibration. Thereby, an active compensation is realized that counteracts the vibration of the microscope stage. This active compensation can dynamically react to vibrations of the microscope stage, and compensate for large amplitudes better than passive compensation, for example dampening.

In another embodiment the vibration generating element is a motor comprising an off-center weight, a piezoelectric element, or a motor configured to move the microscope stage. The motor comprising an off-center weight generates vibrations with a frequency dependent on the current rotational speed of the motor. Thereby, such a motor is a mechanically and electronically simple device for generating vibrations to counteract vibrations of the microscope stage. Similarly, the piezo-element may be controlled in such a way that the piezo-element generates counteracting vibrations. Since the piezo-element has no moving parts, there is minimal mechanical wear on the piezo-element, which extends the lifespan of the positioning device. Like the motor comprising an off-center weight, the motor configured to move the microscope stage may be controlled such that the motor generates vibrations to counteract vibrations of the microscope stage.

In another embodiment the controller is configured to cause the plate drive unit to move the microscope stage at a number of different speeds and/or accelerations, to record the sensor signals corresponding to each of the different speeds and/or accelerations, and to determine at which speeds and/or accelerations the microscope stage experiences resonance based on the recorded sensor signals. The controller may further be configured to generate the control signal such that the microscope stage is not moved for longer than a predetermined duration at once at the speeds and/or accelerations at which the microscope stage experiences resonance. Every rigid object has natural frequencies at which the object oscillates when undisturbed by external forces. When an external force causes the object to oscillate at one of its natural frequencies, the object experiences resonance, which often leads to significantly amplified vibrations. In this embodiment, the controller is configured to perform a calibration in order to determine the speeds and/or accelerations at which the microscope stage experiences resonance, i.e. at which the microscope stage vibrates resonantly. The control signal for moving the microscope stage is then generated based on this calibration such that the microscope stage is preferably not moved at all at the speeds and/or accelerations at which the microscope stage experiences resonance. Alternatively, the microscope stage is not moved at said speeds and/or accelerations for longer than the predetermined duration at once so the positioning device can absorb the vibration caused by resonance. This embodiment mitigates the effects of resonance when moving the microscope stage, and thereby realizes an active compensation that prevents large amplitudes in the vibrations that naturally occur when moving the microscope stage.

In another embodiment the plate drive unit is configured to cause a linear movement and/or a rotational movement of the microscope stage. For example, the plate drive unit may cause linear movements in the x-, y- and/or z-direction and/or a rotation around the optical axis of the microscope. The movement of the microscope stage may be facilitated by one or more motors of the plate drive unit.

In another embodiment the positioning device comprises a z-drive unit configured to linearly move an optical system of the microscope along its optical axis. The controller may further be configured to control the z-drive unit, and to generate a second control signal for controlling the z-drive unit based on the processed sensor signal. In an embodiment comprising the z-drive unit, the at least one vibration detection sensor may be arranged such that the vibration detection sensor can detect vibrations both of the microscope stage and of the optical system. Alternatively, at least one second vibration detection sensor may be provided that is configured to detect a vibration of the optical system, for example at the optical system, and to generate the sensor signal corresponding to said vibration. In such an embodiment, the controller is configured to generate the second control signal based on the processed sensor signal provided by the at least one second vibration detection sensor. The optical system comprises, for example, one or more objectives and further optical components needed to form an image of the sample such as a tube lens. The optical system may further comprise one or more detector elements configured to capture this image formed by the optical components, and to generate image data corresponding to the image. Since all components of the microscope are mechanically connected, a movement of the optical system along the z-axis may cause vibrations of the microscope stage, in particular if the optical system is very heavy. In this embodiment the movement of the optical system is controlled in such a way that vibrations are compensated and/or minimized, thereby stabilizing the image captured by the microscope when the optical system is moved, for example when focusing or imaging different image planes of the sample along the optical axis.

In another embodiment the z-drive unit comprises at least one second vibration generating element configured to cause a vibration of the optical system. The controller may be configured to generate the second control signal such that the second vibration generating element causes a vibration of the optical system that counteracts the vibration currently detected by the vibration detection sensor, in particular the second vibration detection sensor. The second vibration generating element is preferably arranged at the optical system and may be one of the following: A motor comprising an off-center weight, a piezoelectric element, or a motor of the z-drive unit configured to move the optical system along its optical axis. The advantages of these elements are described above. In this embodiment, the control signal causes the second vibration generating element to help counteract the current vibration of the optical system by causing an opposing vibration of the optical system. Thereby, an active compensation is realized that has the advantages described above.

In another embodiment the controller is configured to cause the z-drive unit to move the optical system at a number of different speeds and/or accelerations, to record the second sensor signals corresponding to each of the different speeds and/or accelerations, and to determine at which speeds and/or accelerations the optical system experiences resonance based on the recorded sensor signals. The controller may further be configured to generate the second control signal such that the optical system is not moved for longer than a predetermined duration at once at the speeds and/or accelerations at which the optical system experiences resonance. In this embodiment, the controller is configured to perform another calibration in order to determine the speeds and/or accelerations at which the optical system experiences resonance. Based on this calibration, the second control signal for moving the optical system is generated such that the optical system is preferably not moved at all at the speeds and/or accelerations at which the optical system experiences resonance. Alternatively, the optical system is not moved at said speeds and/or accelerations for longer than the predetermined duration at once so the microscope can absorb the vibration caused by resonance. This embodiment mitigates the effects of resonance when moving the optical system, and thereby realizes an active compensation that prevents large amplitudes in the vibrations that naturally occur when moving the optical system.

In another embodiment the vibration detection sensor comprises an image processing unit configured to receive and process image data from an optical system of the microscope, to detect a vibration of the microscope stage based on the image data, and to generate the sensor signal corresponding to said vibration. In this embodiment, the vibration of the microscope stage is detected using the microscopes optical system. Sequential images are analyzed by the image processing unit to detect minute changes in position or distortion of the microscope stage and/or sample in the image. For analyzing the images, techniques such as digital image correlation (DIC) or optical flow analysis may be used, that quantify these variations over time, identifying shifts that suggest vibrational movement. Additionally, the sharpness or blur levels of the images may be determined that can indicate the presence of vibrations, as vibrations typically reduce image sharpness. Since the vibration is determined based on images captured by the microscope, this embodiment allows for the real-time determination of the vibration without requiring additional physical sensors.

In another embodiment the vibration detection sensor is an accelerometer, in particular a micro-electromechanical accelerometer (MEMS), a piezo-electric vibration detection sensor, or a capacitive vibration detection sensor. The MEMS accelerometer is a compact micro-electromechanical device that measures acceleration forces, to detect motion or vibrations. An advantage of the MEMS accelerometer is its small size, which allows the MEMS accelerometer to be integrated into the positioning device, without adding substantial weight. The piezo-electric vibration detection sensor utilizes the piezoelectric effect to precisely measure the vibrational forces acting upon it with high sensitivity and a wide dynamic range. The capacitive vibration detection sensor detects changes in vibration by measuring the variation in capacitance, which occurs when a distance between conductive plates of the sensor changes due to movement. This enables highly accurate and stable measurements over time, with minimal drift.

The invention also relates to a microscope comprising a positioning device according to any one of the preceding claims. The microscope has the same advantages as the positioning device described above. In particular, the microscope may be supplemented with the features of the dependent claims directed at the positioning device. Furthermore, the positioning device described above may be supplemented with the features described in this document in connection with the microscope.

The invention further relates to a method for positioning a sample in a microscope. The method comprises the following steps: Detecting a vibration of a microscope stage of the microscope using at least one vibration detection sensor, the microscope stage being configured to receive the sample. Generating a sensor signal corresponding to said vibration using the vibration detection sensor. Processing the sensor signal using a controller. Generating a control signal for controlling a plate drive unit based on the processed sensor signal using the controller, the plate drive unit being configured to move the microscope stage.

The method has the same advantages as the positioning device described above. In particular, the method may be supplemented with the features of the dependent claims directed at the positioning device. Furthermore, the positioning device described above may be supplemented with the features described in this document in connection with the method.

In an embodiment the method further comprises the following steps: Controlling at least one vibration generating element of the plate drive unit using the controller, the vibration generating element being configured to cause a vibration of the microscope stage. Generating the control signal such that the vibration generating element causes a vibration of the microscope stage that counteracts the vibration currently detected by the vibration detection sensor. In this embodiment, active compensation is performed based on the currently detected vibration of the microscope stage. The active compensation dynamically reacts to vibrations of the microscope stage by causing the vibration generating element to counteract the current vibration of the microscope stage by an opposing vibration. Thereby, especially large amplitudes, such as those generated by resonance, are better compensated for than, for example, by a passive dampening system.

In another embodiment the method comprises a calibration. The calibration comprises the following calibration steps: Causing the plate drive unit to move the microscope stage at a number of different speeds and/or accelerations using the controller. Recording the sensor signals corresponding to each of the different speeds and/or accelerations using the controller. Determining at which speeds and/or accelerations the microscope stage experiences resonance based on the recorded sensor signals using the controller. The method further comprises generating the control signal such that the microscope stage is not moved for longer than a predetermined duration at once at the speeds and/or accelerations at which the microscope stage experiences resonance. In this embodiment, the microscope stage is preferably not moved at all at the speeds and/or accelerations at which the microscope stage experiences resonance. Alternatively, the microscope stage is not moved at said speeds and/or accelerations for longer than the predetermined duration at once so the positioning device can absorb the vibration caused by resonance. This actively prevents resonance from creating vibrations with large amplitudes, which in turn would cause noticeable blurring and distortions in the image captured by the microscope.

In another embodiment the calibration comprises repeating the calibration steps for different reference weights being arranged on the microscope stage, thereby determining at which speeds and/or accelerations the microscope stage experiences resonance for each of the reference weights. The method further comprises determining the weight of the sample, determining at which speeds and/or accelerations the microscope stage experiences resonance when the sample is arranged on the microscope stage based on the weight of the sample and the calibration using the controller, and generating the control signal such that the microscope stage is not moved at the speeds and/or accelerations at which the microscope stage experiences resonance when the sample is arranged on the microscope stage. Especially in an industrial microscope, the weight of the sample may be substantial, for example in the order of kilograms. Depending on the weight placed on the microscope stage, the microscope stage has different natural frequencies. In this embodiment, the relationship between the weight of the sample and the natural frequencies of the microscope stage is determined during the calibration. If the weight of the sample does not correspond to any one of the reference weights, the natural frequencies or, respectively, the speeds and/or accelerations at which the microscope stage experiences resonance may be determined by, for example, interpolation. By taking the weight of the sample into account, the vibrations of the microscope stage due to resonance can be better compensated, especially with heavy samples in an industrial microscope.

In another embodiment the calibration is performed each time the microscope is set up. Each time the microscope is set up, subtle changes may occur that may alter the natural frequencies of the microscope stage, and thus its vibrational behavior. By performing the calibration each time the microscope is set up, these subtle changes are accounted for, and the vibration compensation is consistent across the different setups.

### Short Description of the Figures

Hereinafter, specific embodiments are described referring to the drawings, wherein:
- Figure 1: is a schematic view of a microscope comprising a positioning device according to an embodiment;
- Figure 2: is a flowchart of a method for positioning a sample in a microscope according to an embodiment;
- Figure 3: is a flowchart of the method for positioning the sample in the microscope according to another embodiment; and
- Figure 4: is a flowchart of an exemplary operation of a virtual vibration detection sensor.

### Detailed Description

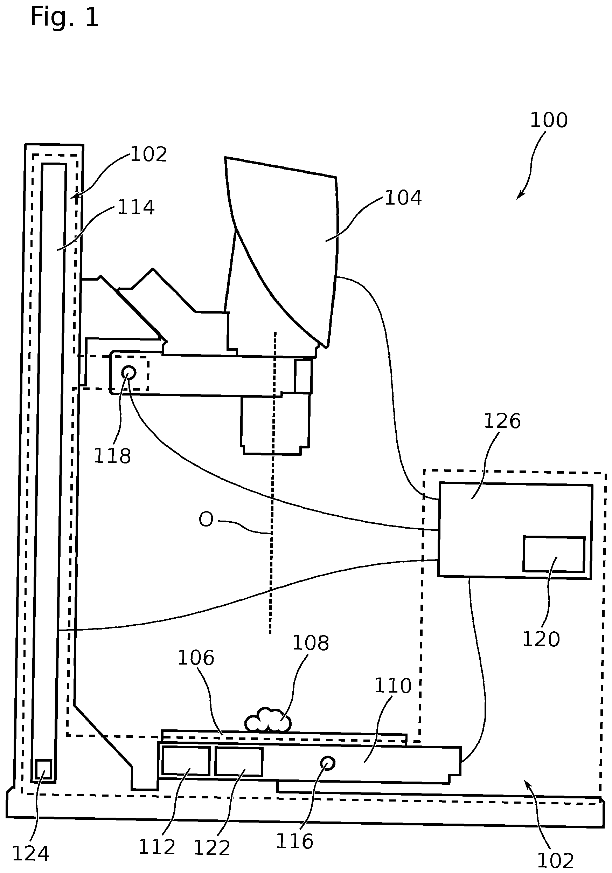

Figure 1 is a schematic view of a microscope 100 comprising a positioning device 102 according to an embodiment.

The microscope 100 comprises an optical system 104, a microscope stage 106, and the positioning device 102. The optical system 104 is configured to generate an image of a sample 108 arranged on the microscope stage 106 and may comprise optical elements, such as an objective and a tube lens, for generating the image. In Figure 1, the optical system 104 is exemplary formed as a digital microscope comprising an image sensor for capturing the image. The image sensor is further configured to generate image data corresponding to said image which can be further processed by a processing device such as a computer. However, the optical system 104 may also comprise at least one eyepiece to allow a user to directly observe the image generated by the optical elements of the optical system 104. In such an embodiment, a digital camera may be arranged at the eyepiece to generate the image data. The optical system 104 may also be removable in order to allow the user to swap the optical system 104 for a different optical system.

The positioning device 102 enables the user to position the sample 108 within the field of view of the optical system 104, by linearly moving and/or rotating the microscope stage 106, and thus the sample 108. To automatically move the microscope stage 106, the positioning device 102 comprises a plate drive unit 110, which may comprise one or more motors 112, for example stepper motors, direct drive motors and piezoelectric motors. In the embodiment shown in Figure 1, the positioning device 102 also comprises a z-drive unit 114 configured to move the optical system 104 along its optical axis O, for example a motor-driven spindle moving a carrier on which the optical system 104 is mounted. The z-drive unit allows the user to focus the optical system 104 and/or to image different planes of the sample 108 along the optical axis O.

Moving the microscope stage 106 inevitably causes the microscope stage 106 to vibrate. Especially when the microscope stage 106 is moved at speeds and/or accelerations that cause vibrations at the natural frequencies of the microscope stage 106, i.e. when resonance occurs, the vibrations can have large amplitudes and cause the image captured by the optical system 104 to become distorted and blurry. Like moving the microscope stage 106, moving the optical system 104 using the z-drive unit 114 causes vibrations both of the optical system 104 and the microscope stage 106. To enable the microscope 100 to generate images free of blur and distortion even when the sample 108 and/or the optical system 104 are moved, the positioning device 102 realizes a vibration compensation that prevents said unwanted vibrations.

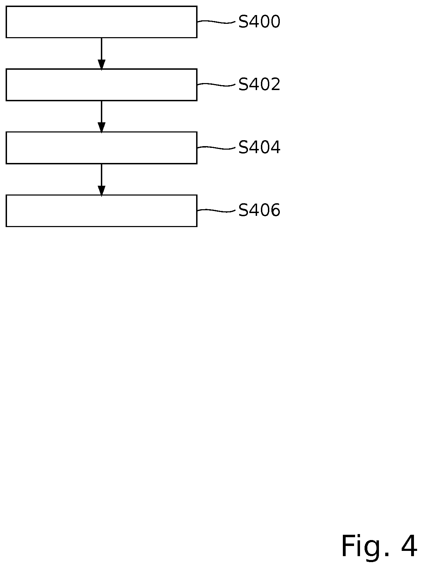

The vibration compensation of the positioning device 102 comprises at least one vibration detection sensor 116, 118, 120. The vibration detection sensor 116, 118, 120 is configured to detect the vibration of the microscope stage 106 and/or the optical system 104 and to generate sensor data corresponding to the vibration. In Figure 1, a first vibration detection sensor 116, 118 is exemplary formed as a physical sensor arranged at the microscope stage 106, for example an accelerometer such as a piezo-electric vibration detection sensor. This vibration detection sensor 116, 118 detects vibrations of the microscope stage 106. Another vibration detection sensor 118 is exemplary formed as a physical sensor arranged as part of the optical system 104. This vibration detection sensor 118 mainly detects vibrations of the optical system 104, but the vibration detection sensor 118 may also pick up vibrations of the microscope stage 106 since all elements of the microscope 100 are mechanically coupled. Yet another vibration detection sensor is exemplary formed by an image processing unit 120, which is configured to detect a vibration of the microscope stage 106 based on the image data captured by the optical system 104. Based on the detected vibration, the image processing unit 120 generates the sensor data, thereby acting as a virtual vibration detection sensor which may augment or replace one of the physical vibration detection sensors 116, 118. This virtual vibration detection sensor can detect both vibrations of the microscope stage 106 and the optical system 104. The operation of the virtual vibration detection sensor is described in more detail below with reference to Figure 4.

In the embodiment shown in Figure 1, the vibration compensation of the positioning device 102 is - at least partially - an active vibration compensation that actively counteracts the vibrations of the microscope stage 106 by generating opposing vibrations using vibration generating elements 122, 124. A first vibration generating element 122 is arranged as part of the plate drive unit 110, and a second vibration generating element 124 is arranged as part of the z-drive unit 114. The vibration generating elements 122, 124 may be the motors that drive the plate drive unit 110 or the z-drive unit 114, respectively, or independent elements such as piezoelectric elements.

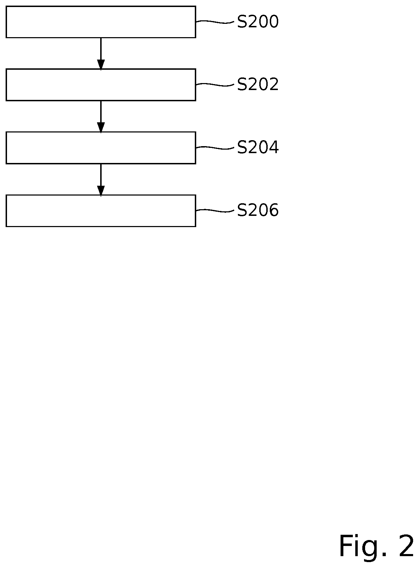

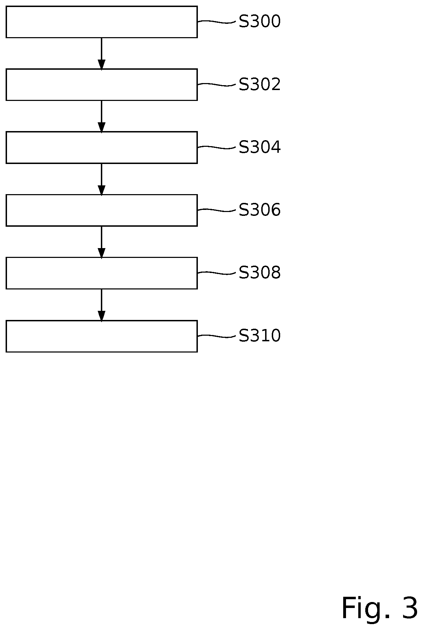

The vibration compensation of the positioning device 102 further comprises a controller 126. The controller 126 is configured to process the sensor signals generated by the vibration detection sensors 116, 118, 120, and to generate control signals based on the sensor signals. In the present embodiment, the controller 126 is configured to generate a first control signal for controlling the plate drive unit 110, and second control signals for controlling the z-drive unit 114. The control signals are generated as part of a method for positioning the sample 108 which utilizes the vibration compensation and is at least partially performed by the controller 126. The method is described in more detail below with reference to Figures 2 and 3. The controller 126 is further configured to perform a calibration as part of said method in which the speeds and/or accelerations are determined at which the microscope stage 106 and/or the optical system 104 experience resonance. The calibration is described in more detail below with reference to Figure 3.

In the embodiment shown in Figure 1, the controller 126 exemplary comprises the image processing unit 120. In an alternative embodiment, the image processing unit 120 may be an independent element.

Figure 2 is a flowchart of the method for positioning the sample 108 according to a first embodiment. In the first embodiment, an active vibration compensation is realized using the vibration generating elements 122, 124 to counteract the current vibration of the microscope stage 106. The method may be performed using the microscope 100 described above in reference to Figure 1 and is described below by way of example only with reference to said microscope 100.

The method is started in step S200. In step S202 the vibration detection sensors 116, 118, 120 detect the current vibration of the microscope stage 106 and generate the corresponding sensor signals. The vibration detection sensors 116, 118, 120 may be controlled by the controller 126 to detect the current vibration of the microscope stage 106. This may include causing the physical vibration detection sensors 116, 118 to record sensor data and/or controlling the optical system 104 and the image processing unit 120 to function as the virtual vibration detection sensor. The sensor signal is then transmitted to the controller 126 for further processing.

In step S204 the controller 126 processes the sensor signals and generates at least the first control signal. In this embodiment, the first control signal is generated to control the first vibration generating element 122 arranged as part of the plate drive unit 110. The first control signal is generated such that the vibration generated by the first vibration generating element 122 cancels the vibration of the microscope stage 106 currently detected by the vibration detection sensors 116, 118, 120. Additionally, if the microscope 100 comprises the second vibration generating element 124, the controller 126 generates the second control signal to control the second vibration generating element 124 arranged as part of the z-drive unit 114. The second control signal is generated such that the vibration generated by the second vibration generating element 124 cancels the vibration of the optical system 104 currently detected by the vibration detection sensors 118, 120.

By counteracting the vibrations of the microscope stage 106 and/or the optical system 104 using the first and/or second vibration generating elements 122, 124, the vibrations of the microscope 100 that cause blurry or distorted images of the sample 108 are compensated for. The method is then ended in step S206.

Figure 3 is a flowchart of the method for positioning the sample 108 according to a second embodiment. In the second embodiment, vibration compensation is realized by not moving the microscope stage 106 and/or the optical system 104 at such speeds and/or accelerations that cause the respective element to vibrate resonantly, i.e. that excite the respective element at their natural frequencies or close to them. The method may be performed using the microscope 100 described above in reference to Figure 1 and is described below by way of example only with reference to said microscope 100.

The method is started in step S300. In step S302 a calibration is performed to determine the speeds and/or accelerations at which the microscope stage 106 experiences resonance. To perform the calibration, the controller 126 causes the plate drive unit 110 to move the microscope stage 106 at a number of different speeds and/or accelerations, for example by causing the plate drive unit 110 to gradually increase or decrease the speed at which the microscope stage 106 is moved. For each speed, the controller 126 records the sensor signals generated by the vibration detection sensors 116, 118, 120. Based on the recorded sensor signals, the controller 126 then determines at which speeds and/or accelerations the microscope stage 106 vibrates resonantly, for example by determining the speeds and/or accelerations corresponding to the highest amplitudes in the recorded sensor signals. Optionally, step S302 may be repeated for different reference weights placed on the microscope stage 106. This makes it possible to determine the speeds and/or accelerations at which the microscope stage 106 experiences resonance for different weights of the sample 108. In particular heavy samples, for example in the order of kilograms such as industrial workpieces, can substantially alter the natural frequencies of the microscope stage 106. By performing the calibration for the different reference weights, the weight of the sample 108 can be accounted for. When step S302 is repeated for different reference weights, the speeds and/or accelerations at which the microscope stage 106 vibrates resonantly are determined later in step S306 based on the weight of the sample 108.

In the optional step S304, another calibration is performed to determine the speeds and/or accelerations at which the optical system 104 experiences resonance. The calibration in step S304 is performed similarly to the calibration performed in step S302, only that the optical system 104 is moved instead of the microscope stage 106. To perform the calibration, the controller 126 causes the z-drive unit 114 to move the optical system 104 at a number of different speeds and/or accelerations. For each speed, the controller 126 records the sensor signals generated by the vibration detection sensors 118, 120. Based on the recorded sensor signals, the controller 126 then determines at which speeds and/or accelerations the optical system 104 vibrates resonantly.

Each time the microscope 100 is set up, subtle changes may occur that effect the natural frequencies of the microscope stage 106 and/or the optical system 104. For example, the microscope 100 may be set up on a different surface having a different dampening effect. In another example, components of the optical system 104 have been changed, altering the weight of the optical system 104, and thus its natural frequencies. It is therefore advantageous to perform the calibration steps S302 and/or S304 each time the microscope 100 is set up.

The optional step S306 may be performed when step S302 has been repeated for different reference weights placed on the microscope stage 106. In step S306 the weight of the sample 108 is determined, for example by a user input, or by a scale that is part of the microscope stage 106. The weight of the sample 108 may also be determined by measuring the force required to move the sample, for example using a force sensor which may be part of the plate drive unit 110. Based on the weight of the sample 108 the controller 126 then determines the speeds and/or accelerations at which the microscope stage 106 vibrates resonantly. For example, the controller 126 may use the speeds and/or accelerations at which the microscope stage 106 experienced resonance having one of the two reference weights closest to the weight of the sample 108 placed upon it and interpolate between the two values. Additionally, machine learning may be used to determine the speeds and/or accelerations at which the microscope stage 106 vibrates resonantly, for example by using a machine learning algorithm to perform the abovementioned interpolation.

In step S308 the controller 126 generates at least the first control signal to control the plate drive unit 110. In this embodiment, the first control signal is generated such that the plate drive unit 110 does not move the microscope stage 106 at the speeds and/or accelerations determined in step S302 or S306 at all. Alternatively, the first control signal is generated such that the plate drive unit 110 does not move the microscope stage 106 at the speeds and/or accelerations determined in step S302 or S306 for only a predetermined duration at a time, allowing the microscope 100 to absorb the vibrations caused by resonance between movements. Additionally, if the microscope 100 comprises the second vibration generating element 124, the controller 126 generates the second control signal such that the z-drive unit 114 does not move the optical system 104 at the speeds and/or accelerations determined in step S304 at all. Alternatively, the first control signal is generated such that the z-drive unit 114 does not move the optical system 104 at the speeds and/or accelerations determined in step S304 for only a predetermined duration at a time, allowing the microscope 100 to absorb the vibrations caused by resonance between movements.

Step S308 is repeated until the sample 108 is arranged at the desired position within the field of view of the optical system 104. The method is then ended in step S310.

The two embodiments of the method described above may be combined. The active vibration compensation may be combined with the control scheme that prevents resonance when moving the microscope stage 106 and/or the optical system 104 based on the calibration. A microscope 100 operated in such a way experiences almost no vibration of the microscope stage 106 and can generate images with no blur or distortion even when the microscope stage 106 and/or the optical system 104 are moved during image acquisition.

Figure 4 is a flowchart of an exemplary operation of the virtual vibration detection sensor. The virtual vibration detection sensor may be operated by the controller 126 of the microscope 100 described above in reference to Figure 1 and is described below by way of example only with reference to said microscope 100.

The operation is started in step S400. In step S402 the controller 126 controls the optical system 104 to capture at least two sequential images of the microscope stage 106 and the sample 108, and to generate image data corresponding to said images. The image data is then transmitted to the image processing unit 120. In step S404 the image processing unit 120 determines a vibration of the microscope stage 106. Since the images were captured using the optical system 104, the image processing unit 120 may also determine a vibration of the optical system 104 itself. The image processing unit 120 may determine the vibrations using image processing techniques such as digital image correlation (DIC) or optical flow analysis. Additionally, the image processing unit 120 may determine the sharpness or blur levels of the images to detect the vibration. The image processing unit 120 then generates the sensor signal in accordance with the determined vibration and transmits the sensor signal to the controller 126. The operation is then ended in step S406.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Microscope
- 102: Positioning device
- 104: Optical system
- 106: Microscope stage
- 108: Sample
- 110: Plate drive unit
- 112: Motor
- 114: Z-drive unit
- 116, 118: Vibration detection sensor
- 120: Image processing unit
- 122, 124: Vibration generating element
- 126: Controller
- O: Optical axis

## Claims

1. A positioning device (102) for a microscope (100), comprising
a plate drive unit (110) configured to move a microscope stage (106) of the microscope (100), the microscope stage (106) being configured to receive a sample (108);
at least one vibration detection sensor (116, 118, 120) configured to detect a vibration of the microscope stage (106) and to generate a sensor signal corresponding to said vibration; and
a controller (126) configured to control at least the plate drive unit (110),
wherein the controller (126) is further configured to process the sensor signal and to generate a control signal for controlling the plate drive unit (110) based on the processed sensor signal.

2. The positioning device (102) according to claim 1, wherein the plate drive unit (110) comprises at least one vibration generating element (122) configured to cause a vibration of the microscope stage (106); and
wherein the controller (126) is configured to generate the control signal such that the vibration generating element (122) causes a vibration of the microscope stage (106) that counteracts the vibration currently detected by the vibration detection sensor (116, 118, 120).

3. The positioning device (102) according to claim 2, wherein the vibration generating element (122) is a motor comprising an off-center weight, a piezoelectric element, or a motor configured to move the microscope stage (106).

4. The positioning device (102) according to any one of the preceding claims, wherein the controller (126) is configured to cause the plate drive unit (110) to move the microscope stage (106) at a number of different speeds and/or accelerations, to record the sensor signals corresponding to each of the different speeds and/or accelerations, and to determine at which speeds and/or accelerations the microscope stage (106) experiences resonance based on the recorded sensor signals; and
wherein the controller (126) is further configured to generate the control signal such that the microscope stage (106) is not moved for longer than a predetermined duration at once at the speeds and/or accelerations at which the microscope stage (106) experiences resonance.

5. The positioning device (102) according to any one of the preceding claims, wherein the plate drive unit (110) is configured to cause a linear movement and/or a rotational movement of the microscope stage (106).

6. The positioning device (102) according to any one of the preceding claims, comprising
a z-drive unit (114) configured to linearly move an optical system (104) of the microscope (100) along its optical axis (O);
wherein the controller (126) is further configured to control the z-drive unit (114), and to generate a second control signal for controlling the z-drive unit (114) based on the processed sensor signal.

7. The positioning device (102) according to claim 6, wherein the z-drive unit (114) comprises at least one second vibration generating element (124) configured to cause a vibration of the optical system (104); and
wherein the controller (126) is configured to generate the second control signal such that the second vibration generating element (124) causes a vibration of the optical system (104) that counteracts the vibration currently detected by the vibration detection sensor (118, 120).

8. The positioning device (102) according to claim 6 or 7, wherein the controller (126) is configured to cause the z-drive unit (114) to move the optical system (104) at a number of different speeds and/or accelerations, to record the second sensor signals corresponding to each of the different speeds and/or accelerations, and to determine at which speeds and/or accelerations the optical system (104) experiences resonance based on the recorded sensor signals; and
wherein the controller (126) is further configured to generate the second control signal such that the optical system (104) is not moved for longer than a predetermined duration at once at the speeds and/or accelerations at which the optical system (104) experiences resonance.

9. The positioning device (102) according to any one of the preceding claims, wherein the vibration detection sensor (120) comprises an image processing unit (120) configured to receive and process image data from an optical system (104) of the microscope (100), to detect a vibration of the microscope stage (106) based on the image data, and to generate the sensor signal corresponding to said vibration.

10. A microscope (100) comprising a positioning device (102) according to any one of the preceding claims.

11. A method for positioning a sample (108) in a microscope (100), the method comprising
detecting a vibration of a microscope stage (106) of the microscope (100) using at least one vibration detection sensor (116, 118, 120), the microscope stage (106) being configured to receive the sample (108);
generating a sensor signal corresponding to said vibration using the vibration detection sensor (116, 118, 120);
processing the sensor signal using a controller (126); and
generating a control signal for controlling a plate drive unit (110) based on the processed sensor signal using the controller (126), the plate drive unit (110) being configured to move the microscope stage (106).

12. The method according to claim 11, wherein the method further comprises
controlling at least one vibration generating element (122) of the plate drive unit (110) using the controller (126), the vibration generating element (122) being configured to cause a vibration of the microscope stage (106); and
generating the control signal such that the vibration generating element (122) causes a vibration of the microscope stage (106) that counteracts the vibration currently detected by the vibration detection sensor (116, 118, 120).

13. The method according to claim 11 or 12, wherein the method comprises a calibration, the calibration comprising the following calibration steps:
causing the plate drive unit (110) to move the microscope stage (106) at a number of different speeds and/or accelerations using the controller (126),
recording the sensor signals corresponding to each of the different speeds and/or accelerations using the controller (126), and
determining at which speeds and/or accelerations the microscope stage (106) experiences resonance based on the recorded sensor signals using the controller (126); and
wherein the method further comprises generating the control signal such that the microscope stage (106) is not moved for longer than a predetermined duration at once at the speeds and/or accelerations at which the microscope stage (106) experiences resonance.

14. The method according to claim 13, wherein the calibration comprises repeating the calibration steps for different reference weights being arranged on the microscope stage (106), thereby determining at which speeds and/or accelerations the microscope stage (106) experiences resonance for each of the reference weights; and
wherein the method further comprises determining the weight of the sample (108),
determining at which speeds and/or accelerations the microscope stage (106) experiences resonance when the sample (108) is arranged on the microscope stage (106) based on the weight of the sample (108) and the calibration using the controller (126), and
generating the control signal such that the microscope stage (106) is not moved at the speeds and/or accelerations at which the microscope stage (106) experiences resonance when the sample (108) is arranged on the microscope stage (106).

15. The method according to claim 13 or 14, wherein the calibration is performed each time the microscope (100) is set up.
